# EUROPEAN PATENT SPECIFICATION

(11) **EP 3 011 375 B1**
(45) Date of publication and mention of the grant of the patent: **10.05.2017**
(21) Application number: 13729757.8
(22) Date of filing: 19.06.2013
(51) Int. Cl.: G02B 6/44

(54) **A POWER CABLE ASSEMBLY DEVICE AND A POWER CABLE PROVIDED WITH SUCH A DEVICE**
STROMKABELANORDNUNGSVORRICHTUNG UND STROMKABEL MIT SOLCH EINER VORRICHTUNG
DISPOSITIF D'ASSEMBLAGE DE CÂBLE D'ALIMENTATION ET CÂBLE D'ALIMENTATION POURVU D'UN TEL DISPOSITIF

(43) Date of publication of application: 27.04.2016
(73) Proprietor: ABB HV Cables (Switzerland) GmbH, 5400 Baden, Aargau (CH)
(72) Inventor: KROGH, Flemming, S-373 00 Jämjö (SE); SACKLIN, Jimmy, S-371 64 Lyckeby (SE)
(74) Representative: Axell, Kristina
(86) International application number: PCT/EP2013/062819
(87) International publication number: WO 2014/202141

(56) References cited:
- SE-C2- 530 277

## Description

### TECHNICAL FIELD

The present invention relates to a power cable assembly device adapted to be arranged in the spaces between neighbouring power cores of a power cable, comprising a profiled body made of a polymer material and adapted to the cross-sectional shape and elongation of the power cable, said profiled body comprising a chamber and a slit to said chamber, said chamber being adapted to receive a fibre optic cable via said slit.

It also relates to a power cable comprising such a power cable assembly device.

### BACKGROUND OF THE INVENTION

When putting a power cable in the ground, or on the sea floor, it is often practical to add a fibre optic cable in a space between the power cores.

A power cable assembly device, a power cable and a tool is known from SE-C2-530 277, respectively. The known assembly device however suffers from a complicated access to the chamber containing a fibre optic cable.

### OBJECT OF THE INVENTION

The object is to provide a power cable assembly device having an improved design as regards access to the chamber of the profiled body.

### SUMMARY OF THE INVENTION

This object has been achieved by the assembly device and the power cable, further comprising the feature that said profiled body is provided with a pair of transitions at least partly defining said slit and converging towards said chamber, said transitions being adapted to supportingly receive a fibre optic cable to be introduced through said slit.

Hereby is achieved a guided introduction of the fibre optic cable to the chamber.

In particular, the cross-section of the profiled body includes a first wall, a second wall and a third wall,
said first wall being convex and having first and second opposite end portions,
said second wall being concave and having third and fourth opposite end portions,
said third wall being concave and having fifth and sixth end portions,
the third end portion of said second wall being connected to said first end portion of said first wall,
the fifth end portion of said third wall being connected to said second end portion of the first wall,
said fourth end portion of the second wall forming said first angled transition,
said the sixth end portion of said third wall connecting to said second angled transition,
said slit extending in the elongation of the profile for allowing introduction of a fibre optic cable into said chamber.

Hereby, the profiled body is further defined.

Suitably, the cross-section of the chamber is substantially annular. Hereby, an optimal shape of the chamber is achieved. Of course, the annular chamber could be polygonal rather than circular.

The elongated slit of the power cable assembly may be closed in an assembled state.

Preferably, the diameter of the chamber (16) is in the range 11 - 25 mm, more preferably 12 - 23 mm.

Alternatively, the diameter of the chamber is in the range 11 - 25 mm, more preferably 13 - 23 mm.

Suitably, the slit is open in a mounted state, and the distance between the fourth end portion of the second wall and the sixth end portion of the third wall defining the slit is in the range 1 mm - 13 mm, more preferably 3 - 11 mm, even more preferably 4 - 6 mm, most preferably 5 mm. Hereby the insertion of a fibre optic cable is made allowed to be performed readily and easily. The slit width should be chosen such that the diameter of the fibre optic cable including cover is 1 - 5 mm larger than the slit width.

Preferably, the wall thickness of either or all of the second wall, the third wall and a wall defining the chamber has a thickness in the range of 2 - 6 mm, more preferably 2,5 - 4 mm, most preferably 3 mm.

Suitably, the first wall is adapted to face a jacket of the power cable, said a second and a third walls being adapted to face a pair of neighbouring power cores.

In particular, the concavity of the outer surface of the second and third walls, respectively, is adapted to the number of power cores and the diameter of the power cores. Hereby, a tight fit will be achieved between the assembly profile and neighbouring power cores, and the power cores and the profiles will form a power cable with a substantially circular cross-section with high mechanical stability.

Furthermore, the convexity of the outer surface of the first wall is adapted to an imaginary circle between a peripheral point of each power core in relation to the diametrical centre point of the power cable. Hereby is achieved a power cable with large form stability when assembled, i.e. the cross-section of the assembled power cable with be substantially circular also at the high pressures on the bottom of sea bottom at large depths.

Preferably, said first angled transition connects to a first radial transition,
said the sixth end portion of said third wall connecting to said second angled transition further connects to a second radial transition,
said first and second radial transitions being substantially parallel to one another, wherein the first radial transition of the fourth end portion of the second wall and the second radial transition of the sixth end portion of the third wall define together at least a part of said slit.

Suitably, said polymer material of the profiled body is PVC or PE. Hereby is achieved a profiled body with strong mechanical properties.

Suitably, the number of power cores is three and the number of power cable assembly devices is three. The diameter of each power core is in the range of 30 - 140 mm, more preferably 40 - 130 mm.

Further, the invention relates to a power cable comprising a plurality of power cable assembly devices according to the invention as defined herein, said power cable assembly devices arranged in the spaces between neighbouring power cores, at least one of said power cord assembly devices containing a fibre optic cable introduced via said slit.

Further, said first wall faces a jacket of the power cable, said second and third walls facing a pair of neighbouring power cores, at least one of said assembly devices containing said fibre optic cable.

Suitably, the concavity of the second and the third walls, respectively, is adapted to the number of power cores and the diameter of the power cores in the power cable.

In addition it is also referred to a power cable, wherein the convexity of the first wall is adapted to an imaginary circle between a peripheral point of each power core in relation to the diametrical centre point of the power cable.

Suitably, the number of power cores is three and the number of power cable assembly devices is three, and wherein the diameter of each power core is in the range 30 - 140 mm, more preferably 40 - 130 mm.

### DRAWING SUMMARY

In the following, the invention will be described in more detail by reference to the enclosed drawings, in which
Fig 1 is a cross-section of a power cable assembly body according to a first embodiment of the invention;
Fig 2 is a cross-section of the interior of a power cable provided with the power cable assembly body shown in Fig 1;
Fig 3 is a cross-section of a power cable assembly body according to a second embodiment of the invention;
Figs 4a - 4d illustrate a tool for introduction of a fibre optic cable in a power cable assembly device shown in figures 1 and 3; and
Fig 5 illustrates a set up of tools in the assembly of a power cable.

### DETAILED DESCRIPTION

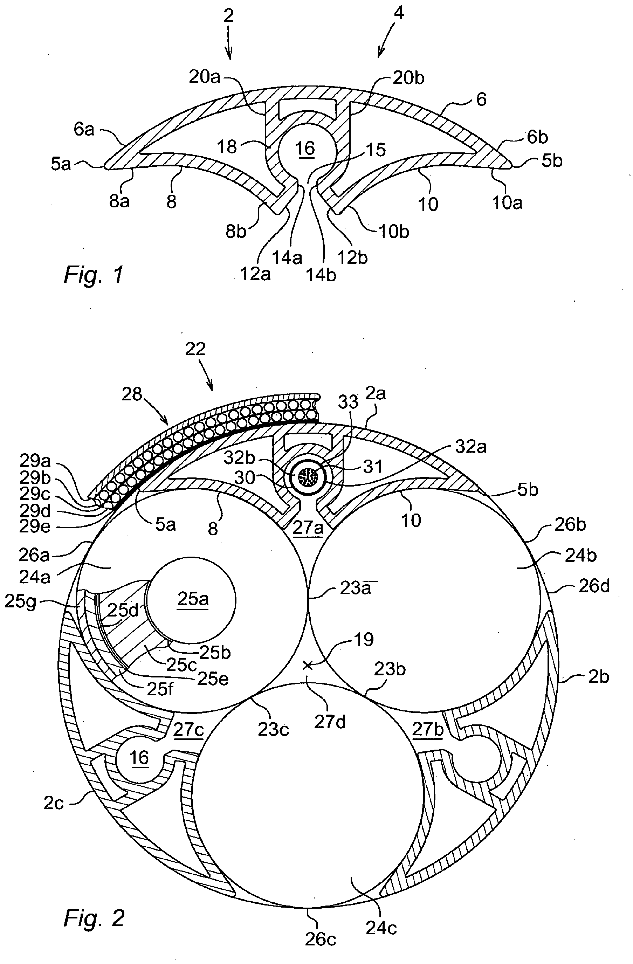

Fig 1 shows a power cable assembly device 2 in the form of an extruded profiled body 4 with a first wall 6, a second wall 8, a third wall 10. The first wall 6 is convex while the second and third walls 8, 10 are concave, the reason for which will be discussed farther below.

The first wall 6 has a first end 6a and a second end 6b. Likewise, the second wall 8 has a first end 8a and a second end 8b, and the third wall 10 has a first end 10a and a second end 10b. The first end 6a of the first wall 6 is connected to the first end 8a of the second wall, while the second end 6b of the first wall 6 is connected to the first end 10a of the third wall 10.

The second end 8b of the second wall 8 continues to a first angled transition 12a and further to a first radial transition 14a. Likewise, the second end 10b of the third wall 10 continues to a second angled transition 12b and further to a second radial transition 14b.

The first and second angled transitions 12a, 12b are converging towards the first and second radial transitions 14a, 14b, the latter being substantially parallel to one another and thus substantially radial to the convex first wall 6.

According to this embodiment, the first and second radial transitions 14a, 14b are arranged at a distance from one another, defining an open slit 15.

Inside the profiled body 4, a chamber 16 defined by a substantially annular wall 18 is arranged. The annular wall 18 extends from the first radial transition 14a to the second radial transition 14b. A pair of reinforcement members 20a, 20b are arranged between the annular wall 18 and the first wall 6. Of course, the number of reinforcement members could be less than two, i.e. one or zero (i.e. leaving an open space between the annular wall 18 and the first wall 6), or more than two, i.e. three, four, five or even more, depending on the space available between the circumferential walls.

The assembly device 2 is made by extrusion of a polymer material, such as PE (e.g. MDPE or HDPE) or PVC and may have a length of several kilometres.

Fig 2 shows the interior of a power cable 22 provided with three neighbouring first, second and third power cores 24a, 24b, 24c, each provided - from the centre to the periphery - with a conductor 25a, a first second semi-conductive layer 25b, insulation 25c, a second semi-conductive layer 25d, a layer of swelling material 25e, a metal screen 25f made of led and a third semi-conductive mantle 25g.

The first and second semi-conductive layers 25b, 25d form a smooth surface which controls the electric field strength. The swelling material 25e tightens against water in case the led screen 25f would start leaking.

Each power core 24a, 24b, 24c has a peripheral point 26a, 26b, 26c in relation to the diametrical centre 19 of the power cable 22, i.e. in the central space 27d. The three peripheral points 26a, 26b, 26c form together in relation to the centre point 19 an imaginary circle 26d.

The first and second power cores 24a, 24b touch one another at a contact point 23a and define a peripheral space 27a together with the imaginary circle 26d. Likewise, the second and third power cores 24b, 24c have a contact point 23b and define a second peripheral space 27b together with the imaginary circle 26d. Likewise, the third and first power cores 24c and 24a have a contact point 23c and define a third peripheral space 27c together with the imaginary circle. The first, second and third power cores 24a, 24b, 24c define between the contact points 23a, 23b, 23c a central space 27d.

In the peripheral space 27a, a first assembly device 2a is provided. Likewise, a second assembly device 2b is arranged in the second peripheral space 27b, and a third assembly device 2c is arranged in the third peripheral space 27c.

The power cable is provided with a jacket 28 to keep the power cores 24a, 24b, 24c and the assembly devices 2a, 2b, 2c together as one unit and to keep the circular cylindrical shape and mechanical protection. The jacket 28 comprises - from the periphery towards the centre point 19 - two layers 29a of yarn made of polypropylene (PP), a first steel wire armour layer 29b, a first soft layer 29c of laying bands, a second steel wire armour layer 29d, a second soft layer 29e of laying bands.

As can be understood from Fig 2, the concavity of the outer surface of the second and third walls 8, 10 of each assembly device 2a, 2b, 2c depends on the diameter of the power cores 24a, 24b, 24c. In the same manner, the convexity of the outer surface of the first wall 6 of each assembly device 2a, 2b, 2c depends on the radius of curvature of the imaginary circle 26d.

An elongated fibre optic cable 30 comprises a fibre optic wave conductor 31, i.e. a bundle of optical fibres inside a metal tubing 32a together with a mass 32b, such as a gel. The metal tubing 32a is covered with a layer of semi-conductive layer 33. The fibre optic cable 30 is put inside the chamber 16 of assembly device 2a.

Of course, this relates correspondingly to the case when a fibre optic cable is put inside the chamber of the assembly devices 2b and/or 2c.

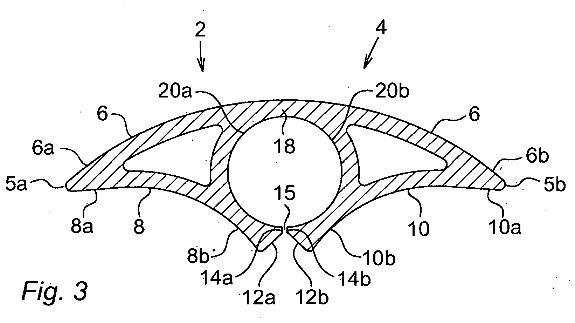

Fig 3 shows a second embodiment of an assembly device 2 made by extrusion of a polymer material, such as PE (e.g. MDPE or HDPE) or PVC.

Also in this embodiment, the first wall 6 of the profiled body 4 is convex and has first and second ends 6a, 6b; the second wall 8 is concave and has first and second ends 8a, 8b; and the third wall 10 is concave and has first and second ends 10a, 10b. The first, second and third walls are connected to one another as described in connection with Fig 1 above.

The second end 8b of the second wall 8 continues to a first angled transition 12a and further to a first radial transition 14a. Likewise, the second end 10b of the third wall 10 continues to a second angled transition 12b and further to a second radial transition 14b.

The first and second angled transitions 12a, 12b are converging towards the first and second radial transitions 14a, 14b, the latter being substantially parallel to one another and thus substantially radial to the convex first wall 6. Also in this embodiment the first and second radial transitions 14a, 14b are substantially parallel to one another and are thus substantially radial to the convex first wall 6.

However, according to this embodiment, the first and second radial transitions 14a, 14b are arranged without distance from one another, i.e. the slit 15 is closed at least when mounted, even though the slit for clarity reasons have been shown to be somewhat open.

Also in this embodiment, the annular wall 18 defining the chamber 16 extends from the first radial transition 14a to the second radial transition 14b. However, no further reinforcement members are needed. Instead, the annual wall 18 is partly constituted by the first wall 6.

Equalisation of the electric potential between the fibre optic cable 30 and metal parts of any one of the power cores 24a, 24b, 24c could be equalised either by providing the surfaces of the chamber 18, the radial transitions 14a, 14b, the angled transitions 12a, 12b and at least a part of the exterior concave walls 8, 10 with a semi-conductive layer. Alternatively, the walls could be provided with holes for allowing sea water to circulate inside the chamber 18.

The first and second radial transitions 14a, 14b have been shown in Figs 1 and 3 to extend only to a small extent of the lateral extension of the walls 8, 10 in relation to the first and second angled transitions 12a, 12b. It should be noted that the lateral extension of the first and second radial transitions may instead be larger than that of the first and second angled transitions 12a, 12b. On the other hand, the first and second radial transitions 14a, 14b may have a minimal lateral extension or no extension at all.

Alternatively, the radial transitions 14a, 14b may be differently shaped, such as rounded.

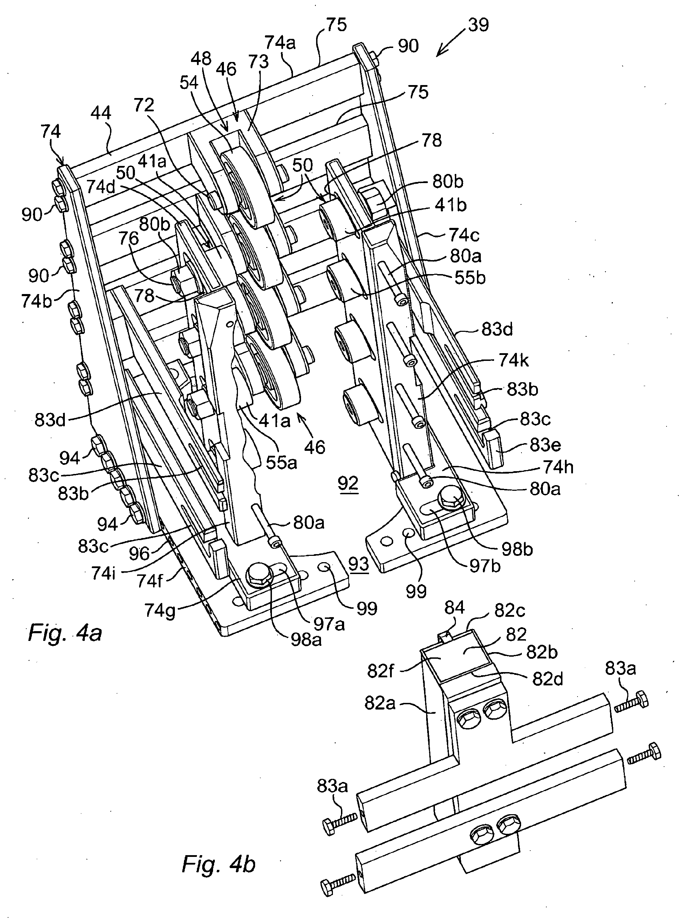

Figure 4a shows a tool 39 provided with support means 46 comprising four support members 48 in the form of double encapsulated ball-bearings 54. Each ball-bearing 54 is rotatably connected via an axle 72 to a U-shaped bearing support 73 across an axis through the aligned ball-bearings 54. The tool 39 is furthermore provided with guide means in the form of four pairs of guide wheels 41 a, 41 b of encapsulated needle bearings 55a, 55b, each rotatable about an axle 76, said axle 76 being parallel to the axles 72 of the ball-bearings 54.

In order to position the four ball-bearings 54 in relation to one another and in relation to the guide wheels, the tool 39 comprises a grid of parallel plates 75 of a first frame part 74a of an interconnection means 44 in the form of a frame 74, together forming a grid. Of course, the grid of parallel plates 75 could instead be constituted by a single plate.

The frame further comprises a pair of side walls 74b, 74c, connected perpendicularly to the first frame part 74a by screws 90. The side walls 74b, 74c are furthermore adjustably connected to a frame support 74f by screws 94 in a row of holes 96. In this manner, the first frame part 74a can be moved in a direction across the row of holes 96. Thus, the position of a plane through the axles 72 of the ball-bearings 54 can be adjusted in relation to the guide wheels 41a, 41b, depending on the thickness of the profiled body 4.

The frame support 74f is provided with an entrance opening 92 for introduction of the profiled body 4 into the tool 39. An access slot 93 in the frame support 74e allows for taking the tool 39 apart even if the profiled body 4 is still inside the tool 39.

The frame 74 further comprises a pair of plates 74d, 74e each connected to extension plates 74g, 74h. The plates 74d, 74e are each provided with a slot 97a, 97b in their opposing ends (the rear ends being hidden) for adjustable connection with screws 98a, 98b to a pair of rows of holes 99 in the frame support 74f. Hereby, the frame 74 is adjusted for the lateral dimension of the profiled body 4.

A pair of reinforcement members 74i, 74k are each provided with four sets of screws 80a. Each guide wheel 41 a, 41 b is independently movable in a slot 78 in the plates 74d, 74e towards a plane through the axles 72 of the ball-bearings 54, and is adjustable in the slot 78 by means of a corresponding set screw 80a. After performed adjustment, the position of the guide wheel 41a or 41b is fixed by means of a lock nut 80b.

The set of screws 80a and lock nuts 80b are adjusted in such a way that each guide wheel 41a, 41b is positioned at a predetermined distance relative to the support member 48. In this way, it is possible to adjust each pairs of guide wheels 41a, 41b relative to the other pairs of guide wheels 41 a, 41b to bear against the edges of 5a, 5b of the profiled body 4. By said adjustment, the slit 15 will be widened and thus opened at a predetermined position between the first pair of wheels and the fourth pair of wheels.

In Fig 4b is shown an elongated guide beam 82 having lateral sides 82a, 82b, a guide side 82c and a connection side 82d (hidden). The guide beam 82 is to be arranged opposite to and facing the support members 48. The guide beam 82 is provided with an elongated guide member 84 to be positioned parallel to a plane through the axles 72 of the ball-bearings 54, by screws 83a in elongated slits 83b, 83c in two pairs of arms 83d, 83e connected to the side walls 74b, 74c of the frame 74.

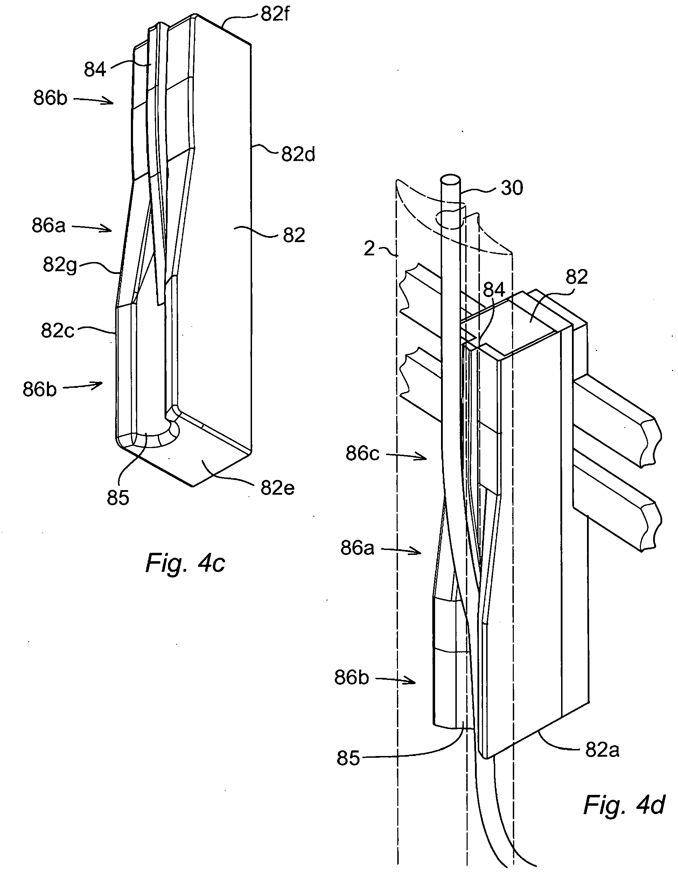

In Fig 4c is shown the guide beam 82 from the opposite direction. At a first end 82e of the guide beam, an elongated U-shaped guide member 85 is provided, while at a second end 82f, and on the same longitudinal side 82c, an elongated guide member 84 is provided. Between the elongated guide, the U-shaped member 85 and the elongated guide member 84, a transition section 86a is provided between first and second sections 86b, 86c. In the transition section 86a, the lateral extension of the elongated U-shaped member 85, measured from the connection side 82d is reduced in a longitudinal direction from the first section 86b towards the elongated guide member 84. Furthermore, in the transition section 86a the lateral extension of the elongated member 84, measured from the connection side 82d is reduced in a longitudinal direction from the second section 86c towards the U-shaped member 85.

In Fig 4d is shown that the fibre optic cable 30 is controlled to keep a longitudinal orientation relative to the slit 15 of the profiled body by the U-shaped guide member 85 at the first section 86b extending from the first end 82e to the transition section 86a. It also shows that the fibre optic cable is introduced into the profiled body 4 via slit 15 by the transition section 86a of the diminishing elongated U-shaped guide member 85 and the raising elongated guide member 84, and that the fibre optic cable 30 is guided to stay inside the chamber by the elongated guide member 84 in the section 86c extending from the transition section 86a towards the second end 82f.

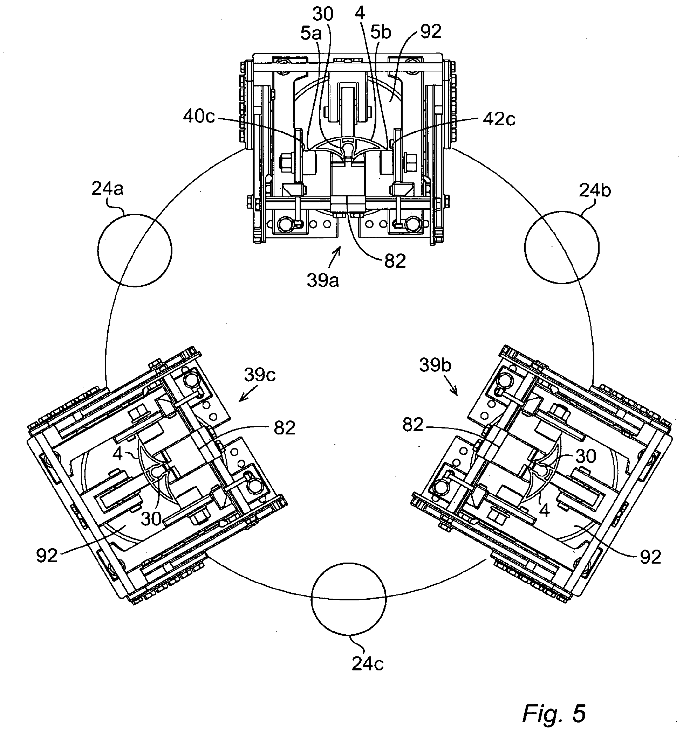

Fig 5 shows the first step of assembly of the power cable.

First, the power cores 24a, 24b, 24c are held 120° in relation to one another by means of not shown equipment in the periphery of an imaginary circle 100.

Then, between the power cores 24a, 24b, 24c three tools 39a, 39b, 39c of the kind shown in Figs 5a-d, are arranged 120° in relation to one another in the periphery of the imaginary circle 100 in relation to and between the power cores 24a, 24b, 24c.

As explained above in connection with Fig 4a, the frame 74 is adjusted for the power cable assembly device 2 to be used, i.e. first frame part 74a is mounted in predetermined holes of the frame support 74f, and the pair of plates 74d, 74e are mounted in predetermined holes 99.

In each tool 39a, 39b, 39c, a profiled body 4 is positioned between the four pairs of guide wheels 41 a, 41b, starting from the level of frame support 74f (i.e. seen from the lower part in fig 5a) and the four support members 48.

The screws 80a of the first, second and third pairs of wheels 41 a, 41 b, counted from the frame support 74f, are adjusted such that the slit 15 of the profiled body 4 of Fig 1 or Fig 3 is opened somewhat more than the diameter of the fibre optic cable 30, while the fourth pair of wheels 41a, 41b are adjusted to allow the slit 15 to be smaller, such that the width of the slit is less than the diameter of the fibre optic cable 30, but wider than the transversal dimension of the guide member 84.

A fibre optic cable 30 is now introduced via the entrance opening 92 of the frame 74 (cf. Fig 4) in each profiled body 30 mounted in the tools 39a, 39b, 39c, and is introduced into the chamber 16 and through the end of the profiled body 4 and temporarily fixed inside the profiled body upon start.

A guide beam 82 of the kind described above is then mounted.

Each profiled body 4 is collected together with the power cores 24a, 24b, 24c at a distance from the tools 39a, 39b, 39c (above the tools as seen in Fig 4a and Fig 5) and are assembled while pulling the profiled bodies 4 and power cores 24a, 24b, 24c away from the tools 39a, 39b, 39c.

During this movement, the slit 15 is opened by the support members 48 and the guide members 41, while fibre optic cables 30 are guided into the chamber by the guide beam 82.

It should also be noted that the tools 39a, 39b, 39c may be mounted for introduction of the fibre optic cable 30 through the entrance opening 92 of the frame 74 horizontally or vertically.

In case of high torsional stiffness of the profiled body 4, a higher pressure may have to be applied on one side 8 than the other 10 by the guide wheels 41 a, 41 b, or a pressure may even only be applied on one side 8 by one or more guide wheels 41a, while a lower or even no pressure may be applied on the other side 10 by one or more guide wheels 41b.

In Figure 5 is shown the simultaneous introduction of a fibre optic cable 30 into three power cable assembly devices 2 of a power cable 22. However, in case only one or two fibre optic cables 30 are to be introduced into the power cable, the tools 39a, 39b, 39c will still be used as guide tools for the assembly of the cores 24a, 24b, 24c and the power cable assembly devices. The support members 48 and guide wheels 41a, 41b of the tool or tools used only as guide tools will then preferably be adjusted in such a way that the slit of such profiled bodies 4 will not be opened.

It should be noted that the guide beam 82 could instead be divided into three different items, corresponding to the sections 86a, 86b and 86c. Alternatively, the first and second sections 86b, 86c could instead be a pair of wheels with a peripheral shape corresponding to the cross-section of the first and second sections 86b, 86c, respectively.

It should be noted that the encapsulated ball-bearing 54 could be exchanged to an encapsulated roller bearing, having circular cylindrical rollers, or to plain bearings. Likewise, the encapsulated needle-bearings could be exchanged to small ball-bearings or plain bearings. Of course the bearings could also be non-encapsulated.

## Claims

1. A power cable assembly device adapted to be arranged in the spaces between neighbouring power cores (24a, 24b, 24c) of a power cable (22), comprising a profiled body (4) made of a polymer material and adapted to the cross-sectional shape and elongation of the power cable, said profiled body (4) comprising a chamber (16) and a slit (15) to said chamber, said chamber being adapted to receive a fibre optic cable (30) via said slit, **characterised in that** said profiled body (4) is provided with a pair of transitions (12a, 12b) at least partly defining said slit (15) and converging towards said chamber (16), said transitions (12a, 12b) being adapted to supportingly receive a fibre optic cable (30) to be introduced through said slit (15).

2. A power cable assembly device according to claim 1, wherein
the cross-section of the profiled body (4) includes a first wall (6), a second wall (8) and a third wall (10),
said first wall (6) being convex and having first and second opposite end portions (6a, 6b),
said second wall (8) being concave and having third and fourth opposite end portions (8a, 8b),
said third wall (10) being concave and having fifth and sixth end portions (10a, 10b),
the third end portion (8a) of said second wall (8) being connected to said first end portion (6a) of said first wall (6),
the fifth end portion (10a) of said third wall (10) being connected to said second end portion (6b) of the first wall (6),
said fourth end portion (8b) of the second wall (8) forming said first angled transition (12a),
said the sixth end portion (10b) of said third wall (10) connecting to said second angled transition (12b),
said slit extending in the elongation of the profile for allowing introduction of a fibre optic cable (30) into said chamber.

3. A power cable assembly device according to claim 1 or 2, wherein the cross-section of the chamber (16) is substantially annular.

4. A power cable assembly device according to any one of claims 1 to 3, wherein said elongated slit (15) is closed in an assembled state.

5. A power cable assembly device according to claim 4, wherein the diameter of the chamber (16) is in the range 11 - 25 mm, more preferably 13 - 23 mm.

6. A power cable assembly device according to any one of claims 2 - 5, wherein the slit is open in a mounted state, and the distance between the fourth end portion (8b) of the second wall (8) and the sixth end portion (10b) of the third wall (10) defining the slit (15) is in the range 1 mm - 13 mm, more preferably 3 - 11 mm, even more preferably 4 - 6 mm, most preferably 5 mm.

7. A power cable assembly device according to claim 6, wherein the diameter of the chamber (16) is in the range 11 - 25 mm, more preferably 12 - 23 mm.

8. A power cable assembly device according to any one of claims 2 - 17, wherein the wall thickness of either or all of the second wall (8), the third wall (10) and a wall (18) defining the chamber (16) has a thickness in the range of 2-6 mm, more preferably 2,5 - 4 mm, most preferably 3 mm.

9. A power cable assembly device according to any one of claims 2 to 8, wherein the first wall (6) is adapted to face a jacket of the power cable (22), said a second and a third walls (8, 10) being adapted to face a pair of neighbouring power cores (24a, 24b, 24c),

10. A power cable assembly device according to any one of claims 2 - 9, wherein the concavity of the outer surface of the second and third walls (8, 10), respectively, is adapted to the number of power cores (24a, 24b, 24c) and the diameter of the power cores.

11. A power cable assembly device according to any one of claims 2 - 10, wherein the convexity of the outer surface of the first wall (6) is adapted to an imaginary circle between a peripheral point (26) of each power core (24a, 24b, 24c) in relation to the diametrical centre point (19) of the power cable.

12. A power cable assembly device according to any one of the preceding claims, wherein said first angled transition (12a) connects to a first radial transition (14a),
said the sixth end portion (10b) of said third wall (10) connecting to said second angled transition (12b) further connects to a second radial transition (14b),
said first and second radial transitions (14a, 14b) being substantially parallel to one another,
wherein the first radial transition (14a) of the fourth end portion (8b) of the second wall and the second radial transition (14b) of the sixth end portion (10b) of the third wall (10) define together at least a part of said slit (15).

13. A power cable comprising a plurality of power cable assembly devices according to any one of the preceding claims, said power cable assembly devices (2a, 2b, 2c) arranged in the spaces between neighbouring power cores (24a, 24b, 24c), at least one of said power cord assembly devices (2a, 2b, 2c) containing a fibre optic cable (30) introduced via said slit (15).

14. A power cable according to claim 13, wherein
said first wall (6) faces a jacket (28) of the power cable (22),
said second and third walls (8, 10) facing a pair of neighbouring power cores (24a, 24b, 24c),
at least one of said assembly devices (2a, 2b, 2c) containing said fibre optic cable (30).

15. A power cable according to any one of claims 13-14, wherein the number of power cores (24a, 24b, 24c) is three and the number of power cable assembly devices (4, 4a, 4b, 4c) is three, and wherein the diameter of each power core (24a, 24b, 24c) is in the range 30 - 140 mm, more preferably 40 - 130 mm.

## Patentansprüche

1. Stromkabelanordnungsvorrichtung, die so ausgeführt ist, dass sie in den Zwischenräumen zwischen benachbarten Stromadern (24a, 24b, 24c) eines Stromkabels (22) angeordnet ist, einen profilierten Körper (4) aus einem Polymermaterial umfasst und an die Querschnittform und Längserstreckung des Stromkabels angepasst ist, wobei der profilierte Körper (4) eine Kammer (16) und einen Schlitz (15) in die Kammer umfasst, wobei die Kammer so ausgeführt ist, dass sie ein Glasfaserkabel (30) über den Schlitz aufnimmt, **dadurch gekennzeichnet, dass** der profilierte Körper (4) mit einem Paar von Übergängen (12a, 12b) versehen ist, die zumindest teilweise den Schlitz (15) definieren und zur Kammer (16) hin konvergieren, wobei die Übergänge (12a, 12b) zum stützenden Aufnehmen eines Glasfaserkabels (30), das durch den Schlitz (15) eingeführt wird, angepasst sind.

2. Stromkabelanordnungsvorrichtung nach Anspruch 1, wobei
der Querschnitt des profilierten Körpers (4) eine erste Wand (6), eine zweite Wand (8) und eine dritte Wand (10) aufweist,
wobei die erste Wand (6) konvex ist und einen ersten und einen zweiten Endabschnitt (6a, 6b), die einander gegenüberliegen, aufweist,
wobei die zweite Wand (8) konkav ist und einen dritten und einen vierten Endabschnitt (8a, 8b), die einander gegenüberliegen, aufweist,
wobei die dritte Wand (10) konkav ist und einen sechsten und einen siebten Endabschnitt (10a, 10b) aufweist,
wobei der dritte Endabschnitt (8a) der zweiten Wand (8) mit dem ersten Endabschnitt (6a) der ersten Wand (6) verbunden ist,
wobei der fünfte Endabschnitt (10a) der dritten Wand (10) mit dem zweiten Endabschnitt (6b) der ersten Wand (6) verbunden ist,
wobei der vierte Endabschnitt (8b) der zweiten Wand (8) den ersten angewinkelten Übergang (12a) bildet,
und der sechste Endabschnitt (10b) der dritten Wand (10) mit dem zweiten angewinkelten Übergang (12b) verbunden ist,
wobei sich der Schlitz in der Längserstreckung des Profils erstreckt, um ein Einführen eines Glasfaserkabels (30) in die Kammer zu ermöglichen.

3. Stromkabelanordnungsvorrichtung nach Anspruch 1 oder 2, wobei der Querschnitt der Kammer (16) im Wesentlichen ringförmig ist.

4. Stromkabelanordnungsvorrichtung nach einem der Ansprüche 1 bis 3, wobei der längliche Schlitz (15) in einem zusammengebauten Zustand geschlossen ist.

5. Stromkabelanordnungsvorrichtung nach Anspruch 4, wobei der Durchmesser der Kammer (16) im Bereich von 11 - 25 mm, stärker bevorzugt 13 - 23 mm liegt.

6. Stromkabelanordnungsvorrichtung nach einem der Ansprüche 2 - 5, wobei der Schlitz in einem montierten Zustand offen ist und der Abstand zwischen dem vierten Endabschnitt (8b) der zweiten Wand (8) und dem sechsten Endabschnitt (10b) der dritten Wand (10), die den Schlitz (15) bilden, im Bereich von 1 mm - 13 mm, stärker bevorzugt 3 - 11 mm, noch stärker bevorzugt 4 - 6 mm liegt, am stärksten bevorzugt 5 mm ist.

7. Stromkabelanordnungsvorrichtung nach Anspruch 6, wobei der Durchmesser der Kammer (16) im Bereich von 11 - 25 mm, stärker bevorzugt 12 - 23 mm liegt.

8. Stromkabelanordnungsvorrichtung nach einem der Ansprüche 2 - 17, wobei die Wanddicke einer der oder sämtlicher der zweiten Wand (8), der dritten Wand (10) und einer Wand (18), die die Kammer (16) bilden, eine Dicke im Bereich von 2 - 6 mm, stärker bevorzugt 2, 5 - 4 mm, am stärksten bevorzugt 3 mm aufweist.

9. Stromkabelanordnungsvorrichtung nach einem der Ansprüche 2 bis 8, wobei die erste Wand (6) so ausgeführt ist, dass sie einer Ummantelung des Stromkabels (22) zugewandt ist, wobei die zweite und die dritte Wand (8, 10) so ausgeführt sind, dass sie einem Paar von benachbarten Stromadern (24a, 24b, 24c) zugewandt sind.

10. Stromkabelanordnungsvorrichtung nach einem der Ansprüche 2 - 9, wobei die Konkavität der äußeren Fläche jeweils der zweiten und der dritten Wand (8, 10) an die Anzahl von Stromadern (24a, 24b, 24c) und den Durchmesser der Stromadern angepasst ist.

11. Stromkabelanordnungsvorrichtung nach einem der Ansprüche 2 - 10, wobei die Konvexität der äußeren Fläche der ersten Wand (6) an einen gedachten Kreis zwischen einem am Umfang befindlichen Punkt (26) jeder Stromader (24a, 24b, 24c) im Verhältnis zu dem diametralen Mittelpunkt (19) des Stromkabels angepasst ist.

12. Stromkabelanordnungsvorrichtung nach einem der vorhergehenden Ansprüche, wobei der erste angewinkelte Übergang (12a) mit einem ersten radialen Übergang (14a) verbunden ist, der sechste Endabschnitt (10b) der dritten Wand (10), der mit dem zweiten angewinkelten Übergang (12b) verbunden ist, ferner mit einem zweiten radialen Übergang (14b) verbunden ist, wobei der erste und der zweite radiale Übergang (14a, 14b) im Wesentlichen parallel zueinander sind,
wobei der erste radiale Übergang (14a) des vierten Endabschnitts (8b) der zweiten Wand und der zweite radiale Übergang (14b) des sechsten Endabschnitts (10b) der dritten Wand (10) zusammen mindestens einen Teil des Schlitzes (15) definieren.

13. Stromkabel, das eine Vielzahl von Stromkabelanordnungsvorrichtungen nach einem der vorhergehenden Ansprüche umfasst, wobei die Stromkabelanordnungsvorrichtungen (2a, 2b, 2c) in den Zwischenräumen zwischen benachbarten Stromadern (24a, 24b, 24c) angeordnet sind, wobei mindestens eine der Stromkabelanordnungsvorrichtungen (2a, 2b, 2c) ein Glasfaserkabel (30), das über den Schlitz (15) eingeführt wird, enthält.

14. Stromkabel nach Anspruch 13, wobei
die erste Wand (6) einer Ummantelung (28) des Stromkabels (22) zugewandt ist,
die zweite und die dritte Wand (8, 10) einem Paar von benachbarten Stromadern (24a, 24b, 24c) zugewandt sind,
mindestens eine der Anordnungsvorrichtungen (2a, 2b, 2c) das Glasfaserkabel (30) enthält.

15. Stromkabel nach einem der Ansprüche 13 - 14, wobei die Anzahl von Stromkabeln (24a, 24b, 24c) drei ist und die Anzahl von Stromkabelanordnungsvorrichtungen (4, 4a, 4b, 4c) drei ist und wobei der Durchmesser jeder Stromader (24a, 24b, 24c) im Bereich von 30 - 140 mm, stärker bevorzugt 40 - 130 mm liegt.

## Revendications

1. Dispositif d'assemblage de câble d'alimentation adapté pour être disposé dans les espaces entre âmes d'alimentation voisines (24a, 24b, 24c) d'un câble d'alimentation (22), comprenant un corps profilé (4) constitué d'un matériau polymère et adapté à la forme en coupe transversale et l'allongement du câble d'alimentation, ledit corps profilé (4) comprenant une chambre (16) et une fente (15) vers ladite chambre, ladite chambre étant adaptée pour recevoir un câble à fibre optique (30) par ladite fente, **caractérisé en ce que** ledit corps profilé (4) est pourvu d'une paire de transitions (12a, 12b) définissant au moins partiellement ladite fente (15) et convergeant en direction de ladite chambre (16), lesdites transitions (12a, 12b) étant adaptées pour recevoir, de manière à assurer un support, un câble à fibre optique (30) destiné à être introduit à travers ladite fente (15).

2. Dispositif d'assemblage de câble d'alimentation selon la revendication 1, dans lequel
la section transversale du corps profilé (4) comporte une première paroi (6), une deuxième paroi (8) et une troisième paroi (10),
ladite première paroi (6) étant convexe et ayant des première et deuxième parties d'extrémité opposées (6a, 6b),
ladite deuxième paroi (8) étant concave et ayant des troisième et quatrième parties d'extrémité opposées (8a, 8b),
ladite troisième paroi (10) étant concave et ayant des cinquième et sixième parties d'extrémité (10a, 10b),
la troisième partie d'extrémité (8a) de ladite deuxième paroi (8) étant reliée à ladite première partie d'extrémité (6a) de ladite première paroi (6),
la cinquième partie d'extrémité (10a) de ladite troisième paroi (10) étant reliée à ladite deuxième partie d'extrémité (6b) de la première paroi (6),
ladite quatrième partie d'extrémité (8b) de la deuxième paroi (8) formant ladite première transition oblique (12a),
ladite sixième partie d'extrémité (10b) de ladite troisième paroi (10) étant reliée à ladite seconde transition oblique (12b),
ladite fente s'étendant dans l'allongement du profilé pour permettre l'introduction d'un câble à fibre optique (30) dans ladite chambre.

3. Dispositif d'assemblage de câble d'alimentation selon la revendication 1 ou 2, dans lequel la section transversale de la chambre (16) est sensiblement annulaire.

4. Dispositif d'assemblage de câble d'alimentation selon l'une quelconque des revendications 1 à 3, dans lequel ladite fente allongée (15) est fermée dans un état assemblé.

5. Dispositif d'assemblage de câble d'alimentation selon la revendication 4, dans lequel le diamètre de la chambre (16) se situe dans la gamme de 11-25 mm, mieux 13-23 mm.

6. Dispositif d'assemblage de câble d'alimentation selon l'une quelconque des revendications 2 à 5, dans lequel la fente est ouverte dans un état monté, et la distance entre la quatrième partie d'extrémité (8b) de la deuxième paroi (8) et la sixième partie d'extrémité (10b) de la troisième paroi (10) définissant la fente (15) se situe dans la gamme de 1 mm-13 mm, mieux 3-11 mm, mieux encore 4-6 mm, idéalement 5 mm.

7. Dispositif d'assemblage de câble d'alimentation selon la revendication 6, dans lequel le diamètre de la chambre (16) se situe dans la gamme de 11-25 mm, mieux 12-23 mm.

8. Dispositif d'assemblage de câble d'alimentation selon l'une quelconque des revendications 2 à 17, dans lequel l'épaisseur de paroi de l'une ou l'autre de la deuxième paroi (8), la troisième paroi (10) et une paroi (18) définissant la chambre (16) ou de toutes celles-ci a une épaisseur dans la gamme de 2-6 mm, mieux 2,5-4 mm, idéalement 3 mm.

9. Dispositif d'assemblage de câble d'alimentation selon l'une quelconque des revendications 2 à 8, dans lequel la première paroi (6) est adaptée pour faire face à une gaine du câble d'alimentation (22), lesdites deuxième et troisième parois (8, 10) étant adaptées pour faire face à une paire d'âmes d'alimentation voisines (24a, 24b, 24c).

10. Dispositif d'assemblage de câble d'alimentation selon l'une quelconque des revendications 2 à 9, dans lequel la concavité de la surface extérieure des deuxième et troisième parois (8, 10), respectivement, est adaptée au nombre d'âmes d'alimentation (24a, 24b, 24c) et au diamètre des âmes d'alimentation.

11. Dispositif d'assemblage de câble d'alimentation selon l'une quelconque des revendications 2 à 10, dans lequel la convexité de la surface extérieure de la première paroi (6) est adaptée à un cercle imaginaire entre un point périphérique (26) de chaque âme d'alimentation (24a, 24b, 24c) par rapport au centre diamétral (19) du câble d'alimentation.

12. Dispositif d'assemblage de câble d'alimentation selon l'une quelconque des revendications précédentes, dans lequel ladite première transition oblique (12a) est reliée à une première transition radiale (14a), ladite sixième partie d'extrémité (10b) de ladite troisième paroi (10) reliée à ladite seconde transition oblique (12b) étant en outre reliée à une seconde transition radiale (14b), lesdites première et seconde transitions radiales (14a, 14b) étant essentiellement parallèles l'une à l'autre,
dans lequel la première transition radiale (14a) de la quatrième partie d'extrémité (8b) de la deuxième paroi et la seconde transition radiale (14b) de la sixième partie d'extrémité (10b) de la troisième paroi (10) définissent conjointement au moins une partie de ladite fente (15).

13. Câble d'alimentation comprenant une pluralité de dispositifs d'assemblage de câble d'alimentation selon l'une quelconque des revendications précédentes, lesdits dispositifs d'assemblage de câble d'alimentation (2a, 2b, 2c) étant disposés dans les espaces entre âmes d'alimentation voisines (24a, 24b, 24c), au moins un desdits dispositifs d'assemblage de câble d'alimentation (2a, 2b, 2c) contenant un câble à fibre optique (30) introduit par ladite fente (15).

14. Câble d'alimentation selon la revendication 13, dans lequel
la première paroi (6) fait face à une gaine (28) du câble d'alimentation (22),
lesdites deuxième et troisième parois (8, 10) font face à une paire d'âmes d'alimentation voisines (24a, 24b, 24c),
au moins un desdits dispositifs d'assemblage (2a, 2b, 2c) contenant ledit câble à fibre optique (30).

15. Câble d'alimentation selon l'une quelconque des revendications 13 à 14, dans lequel le nombre d'âmes d'alimentation (24a, 24b, 24c) est de trois et le nombre de dispositifs d'assemblage de câble d'alimentation (4, 4a, 4b, 4c) est de trois, et dans lequel le diamètre de chaque âme d'alimentation (24a, 24b, 24c) se situe dans la gamme de 30-140 mm, mieux 40-130 mm.
